# FASCICULE DE BREVET EUROPEEN

(11) **EP 0 616 962 B1**
(45) Date de publication et mention de la délivrance du brevet: **04.12.1996**
(21) Numéro de dépôt: 93810116.9
(22) Date de dépôt: 22.02.1993
(51) Int. Cl.: B65G 61/00

(54) **Procédé et dispositif de détection du nombre de rangées d'objets de la dernière couche d'un empilement disposé sur une palette et procédé de dépalettisation**
Verfahren und Vorrichtung zur Detektion der Zahl der Reihen von Gegenständen der letzten Stapelschicht auf einer Palette und Entstapelverfahren
Method and device for detection of the number of rows of articles in the last layer of a pile on a pallet and depiling method

(43) Date de publication de la demande: 28.09.1994
(73) Titulaire: FABRIQUES DE TABAC REUNIES S.A., 2003 Neuchâtel-Serrières (CH)
(72) Inventeur: Cestonaro, Jean, CH-2074 Marin (CH)
(74) Mandataire: Fischer, Franz Josef

(56) Documents cités:
- GB-A- 2 205 300
- US-A- 5 169 284

## Description

La présente invention se rapporte aux procédés et dispositifs permettant de retirer automatiquement des objets disposés sur une palette et concerne plus particulièrement un procédé et un dispositif permettant de détecter la configuration de la couche supérieure d'un empilement disposé en couches et rangées sur ladite palette afin de pouvoir amener les moyens de saisie en position pour pouvoir retirer des objets de cette couche supérieure.

Un dépalettiseur a été décrit dans le brevet EP-A-0.354.873 qui permet, soit à l'aide des pinces décrites dans ce document, soit à l'aide de celles décrites dans le brevet correspondant à la demande EP 91810695.6, de retirer automatiquement et simultanément toute une rangée d'objets de la couche supérieure d'un empilement disposé sur une palette. Si le fonctionnement des deux dispositifs décrits donne entière satisfaction, il existait une limitation de leur utilisation qui voulait que la couche supérieure devait être complète, respectivement que toutes les rangées d'objets devaient être présentes, pour que le dépalettiseur puisse commencer son travail de manière entièrement automatique sur une nouvelle palette. Le procédé de commande de ce dispositif était donc tel que, lorsque une nouvelle palette avait été introduite dans la machine, les pinces de saisie se dirigeaient automatiquement vers la première rangée d'objets de la couche supérieure. Or il peut se trouver le cas où la couche supérieure n'est pas complète lorsque le dépalettiseur doit commencer son cycle, soit que une ou plusieurs rangées manquent lorsque la palette est introduite dans la machine, soit que le cycle de dépalettisation a été interrompu par un arrêt machine, alors qu'un certain nombre de rangées d'objets ont déjà été transférées, et qu'il soit nécessaire de réinitialiser le cycle de prise. Jusqu'à présent l'opérateur devait indiquer manuellement le numéro d'ordre de la première rangée à saisir. Ce moyen de faire est un inconvénient dans la mesure où, à côté de la présence attentive nécessaire de l'opérateur, une indication erronée peut conduire à l'accomplissement de un ou plusieurs cycles à vide, d'où une diminution de productivité de la machine, soit à un endommagement de un ou plusieurs des objets et/ou d'une partie du dépalettiseur si une rangée présente sur la couche a été signalée comme absente.

Un premier but de l'invention est donc de proposer un procédé et un dispositif permettant de détecter automatiquement, sans intervention de l'opérateur, quelle est la première rangée d'objets à saisir au début d'un cycle de dépalettisation.

Un autre but de l'invention est de concevoir le procédé et le dispositif selon l'invention de telle manière qu'ils puissent être utilisés sur un dépalettiseur existant, sans modifications importantes des moyens installés sur cette machine, utilisant au maximum lesdits moyens déjà existants.

Un autre but de l'invention est de proposer un procédé de dépalettisation intégrant le procédé de détection.

Encore un autre but de l'invention est de permettre que le dispositif selon l'invention puisse aussi détecter l'horizontalité et la planéité de la couche supérieure.

Et enfin, encore un autre but de l'invention est de proposer un dépalettiseur pouvant être équipé d'un dispositif selon l'invention, d'origine ou ultérieurement.

Ces buts sont obtenus par un procédé de détection conforme à la partie caractérisante des revendications 1 à 6, un procédé de dépalettisation répondant aux caractéristiques des revendications 7 à 9 et un dispositif possédant les caractéristiques mentionnées dans les revendications 10 à 15 pouvant être utilisé avec un dépalettiseur selon la revendication 16.

La description qui suit décrit les procédés et le dispositif selon l'invention adaptés à un dépalettiseur de paquets d'étiquettes destinées à l'industrie du tabac, mais elle doit se comprendre comme pouvant aussi s'appliquer à des paquets d'étiquettes destinées à d'autres types d'industrie et plus généralement à d'autres objets. La description est à considérer en regard du dessin en annexe comportant les figures où:
la figure 1 représente une vue générale d'un dépalettiseur et le contexte général de fonctionnement du procédé et du dispositif selon l'invention,
la figure 2 représente une vue latérale d'une pince de saisie munie du dispositif de détection selon l'invention,
les figures 3A, 3B, 3C et 3D représentent schématiquement plusieurs étapes du procédé de détection selon une configuration de la couche supérieure,
les figures 4A et 4B représentent schématiquement deux étapes du procédé de détection selon une autre configuration de la couche supérieure, et
la figure 5 représente l'utilisation d'une rangée de moyens de palpage pour détecter l'horizontalité et la planéité de la couche supérieure.

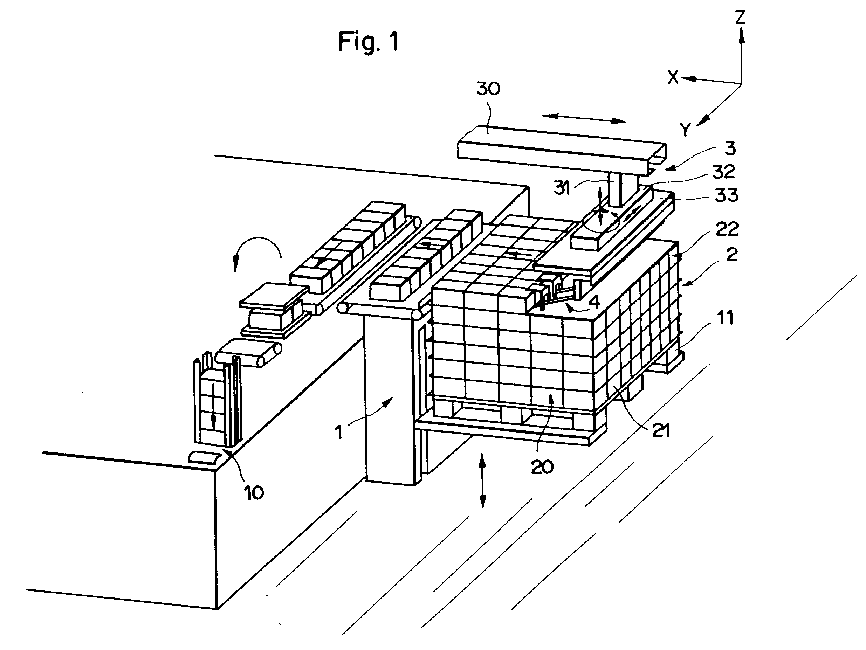

A la figure 1 on a une vue schématique d'un dépalettiseur 1, chargé d'alimenter une machine d'empaquetage 10, à partir d'une palette 11 chargée d'un empilement 2 comportant une pluralité de couches 20, chacune d'entre elles composée d'une autre pluralité de rangées 21 comportant chacune encore une autre pluralité de piles 22 d'étiquettes. Dans le cas représenté, l'empilement 2 complet comprend normalement douze couches 20, chacune comportant cinq rangées 21 de huit piles 22 de 250 étiquettes. Le dépalettiseur 1 comprend en outre des moyens de déplacement 3 des moyens de prise 4 des étiquettes, composés d'un rail 30, permettant un déplacement selon l'axe X d'un premier chariot 31, ledit premier chariot 31 supportant un second chariot 32 pouvant se déplacer principalement selon l'axe Y et selon certaines formes d'exécution aussi selon l'axe Z, et supportant lui-même un support 33 apte à pivoter autour de l'axe Z. Le support 33 supporte le dispositif de pinces 4 permettant la prise simultanée de toute une rangée 21 d'étiquettes.

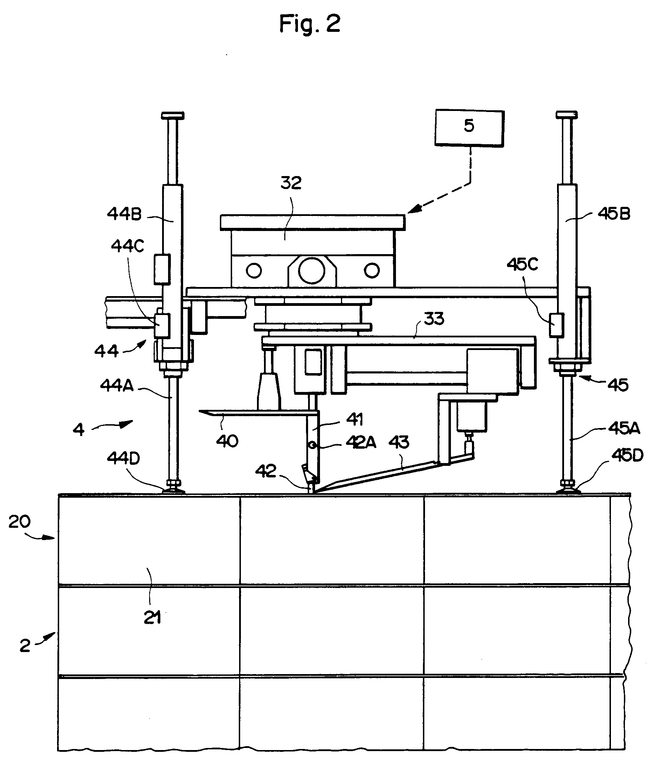

Une partie du dispositif de pinces 4 est représentée plus en détail à la figure 2. Ce dispositif correspond essentiellement à celui de la demande EP 91810695.6 mentionnée plus haut. On y voit la plaque d'appui supérieure 40, à l'arrière et perpendiculairement à laquelle on trouve la plaque d'appui arrière verticale 41 supportant le racleur 42 pouvant coulisser verticalement le long de la plaque d'appui arrière verticale 41 ainsi que la plaque d'appui inférieure 43. Le dispositif 4 est complété par au moins un palpeur avant 44 et au moins un palpeur arrière 45, chacun d'eux étant constitué d'une tige 44A, 45A, actionnée par un vérin pneumatique ou hydraulique à double effet 44B, 45B de manière à pouvoir se déplacer verticalement. Une cellule de détection 44C, 45C disposée sur chaque vérin 44B, 45B, permet de connaître la position exacte selon l'axe vertical de la pointe 44D, 45D de chaque tige de palpeur. Un troisième palpeur central est constitué par le racleur 42 dont la position selon l'axe Z est repérée par une cellule de détection 42A disposée sur la plaque arrière verticale 41. Le dispositif est commandé par des moyens de commande schématisés en 5. A l'exception du palpeur 45, les éléments mentionnés ci-dessus ont été décrits dans la demande et le brevet susmentionnés, de même que leur fonctionnement, ils ne seront donc pas décrits plus précisément ici.

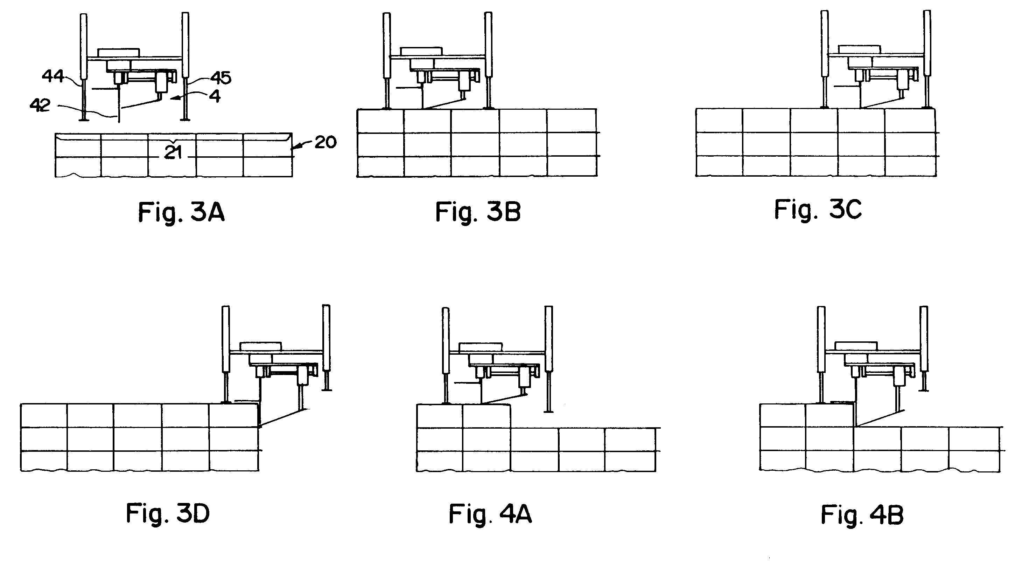

Les figures 3A, 3B, 3C et 3D montrent le fonctionnement du dispositif et le déroulement des procédés selon l'invention dans le cas où la couche 20 est complète, c'est-à-dire comprend, dans le cas représenté, cinq rangées 21 d'objets, respectivement de piles d'étiquettes. A la figure 3A, alors que la palette est arrêtée à une hauteur telle que, quel que soit le nombre de couches qu'elle supporte, des déplacements du dispositif de pinces 4 ne peuvent provoquer de collision entre ledit dispositif et la couche supérieure de l'empilement 2, le dispositif de pinces 4 a été amené par les moyens de déplacement 3 mentionnés précédemment à sa position de départ de cycle de palpage, soit en une position où le palpeur 44 surplombe la dernière rangée de la couche supérieure, le palpeur constitué par le racleur 42 surplombe la rangée qui la précède alors que le palpeur 45 surplombe l'antépénultième rangée. Les palpeurs 44 et 45 ainsi que le racleur 42 sont alors abaissés ou relâchés de manière à descendre au plus bas de leur course selon l'axe Z. La palette est alors lentement montée selon l'axe Z, jusqu'à ce qu'au-moins un palpeur (les trois palpeurs dans le cas représenté) soit poussé par le bas et entraîné verticalement jusqu'en une position où il actionne la cellule de détection qui lui correspond. Ce signal commande l'arrêt de la montée de la palette et indique la présence d'une rangée sous le palpeur en question, comme on va le voir ci-dessous. A la figure 3B, qui est identique à une autre échelle à la figure 2, la palette a été élevée verticalement de manière à ce que la dernière couche ait actionné au-moins un palpeur comme indiqué ci-dessus. Dans le cas représenté aux figures 2 et 3B, les deux pointes 44D et 45D ainsi que le racleur 42 sont entrés en contact chacun avec une pile d'étiquettes faisant partie de la rangée que chacun desdits éléments surplombe, ce qui actionne les cellules de détection 42A, 44C et 45C, signalant la présence des trois dites rangées. La palette est alors à nouveau abaissée et le dispositif de pinces 4 est déplacé selon l'axe X vers l'avant de la palette de manière à ce que les trois palpeurs 42, 44 et 45 surplombent les trois rangées 21 de la couche supérieure disposées le plus en avant, position où la palette est relevée et le dispositif est à nouveau abaissé comme précédemment pour procéder à l'opération de palpage, comme représenté à la figure 3C. Vu que les trois premières rangées avant sont présentes sur la palette, les trois cellules de détection 42A, 44C et 45C signalent cet état, signifiant ainsi au programme du dispositif de commande 5 que la couche supérieure est complète. En conséquence, le programme commandera le dispositif de pinces 4 afin que celui-ci vienne en position de prise de la première rangée de la couche, comme représenté à la figure 3D. Cette position de prise ainsi que les opérations qu'effectue le dispositif de pinces 4 pour la prise de cette rangée ont été décrites dans les brevets précités.

La figure 4A montre une configuration de la couche supérieure où, par exemple, les trois rangées disposées normalement le plus en avant sur la couche supérieure manquent. Comme précédemment le dispositif de pinces a été amené au dessus de l'emplacement occupé théoriquement par les trois dernières rangées puis la palette a été élevée jusqu'à ce que la couche supérieure arrive à hauteur de palpage. Lorsqu'ils sont actionnés, les palpeurs 42, 44 et 45 ne détectent alors que la présence des deux dernières rangées, par les cellules de détection 42A et 44C, alors que la pointe 45D du palpeur 45 ne peut s'appuyer sur un objet, situation signalée par la cellule de détection 45C. Cette configuration de la couche est alors enregistrée par le programme qui commande alors le dispositif de pinces 4 pour venir en position de saisie de la première rangée présente sur la couche, comme représenté à la figure 4B.

Le procédé de détection des autres types de configuration possibles de la dernière couche se déduit facilement à partir des exemples décrits, par exemple si seule la dernière rangée de la couche supérieure est présente, l'absence de l'avant dernière couche est signalée par le racleur 42, respectivement sa cellule de détection 42A. Le processus de détection de rangées manquantes a été décrit lors de la première phase de détection, soit lorsque le dispositif de pinces surplombe les trois dernières rangées, mais son action est identique lorsque, après avoir détecté la présence des trois dernières rangées, il vient surplomber les trois premières, comme sur la figure 3B, et peut alors détecter l'absence de la première ou des deux premières rangées.

De manière préférentielle, le cycle de palpage/détection ne sera activé que lorsque une nouvelle palette a été chargée dans le dépalettiseur ou après un arrêt du dépalettiseur, pour une raison quelconque, nécessitant la réinitialisation de son cycle de travail. Ainsi, lorsque la première rangée présente aura été détectée, son numéro d'ordre dans la couche sera enregistré dans le programme et, après que cette rangée aura été prise et transférée, le numéro d'ordre de la rangée à saisir sera incrémenté de une unité afin que le dispositif de prise aille saisir la rangée suivante, et ainsi de suite jusqu'à la fin de la couche, suite de quoi la palette sera élevée d'une hauteur correspondant à celle d'une couche, le dispositif de prise allant alors directement prendre la première rangée, puis les suivantes de la nouvelle couche, après que le carton intercalaire séparant les deux couches ait été éliminé par des moyens connus. En variante, il est aussi possible que le cycle de palpage soit activé avant la prise de chaque rangée de chaque couche.

Le fonctionnement du dispositif a été décrit pour la détection de la configuration d'une couche comportant normalement cinq rangées, mais il est évident que le procédé et le dispositif selon l'invention peuvent s'appliquer à la détection de la configuration d'une couche pouvant comporter un autre nombre de rangées, le procédé étant conduit de manière à ce que chaque rangée présente soit détectée, jusqu'à ce que soit la couche soit déclarée complète ou alors qu'une rangée soit déclarée manquante.

De même, le fonctionnement du dispositif a été décrit avec une initialisation du cycle de palpage/détection au dessus de la ou des dernières rangées qui seront ultérieurement prises et transférées, soit dans la forme d'exécution représentée du dépalettiseur, celle ou celles disposées à proximité immédiate de la machine d'empaquetage. Il est tout aussi possible de concevoir le procédé pour que la ou les premières rangées palpées soient celle ou celles disposées à l'autre extrémité de la couche.

Le dispositif a été décrit en regard d'une pince 40,42,43, alors que le dispositif de pinces 4 comporte généralement une pluralité desdites pinces afin de saisir simultanément tous les objets, respectivement toutes les piles d'étiquettes faisant partie de la rangée. Dans la forme d'exécution préférentielle du dispositif selon l'invention, chaque pince est munie d'un racleur 42 alors que seulement deux palpeurs 44 et deux palpeurs 45 sont disposés en avant et en arrière de chaque extrémité de la rangée de pinces 4, soit en regard de la première et de la dernière pince. Cette configuration permet en particulier de détecter le bon positionnement de la couche supérieure en détectant sa position selon un axe transversal horizontal (axe Y).

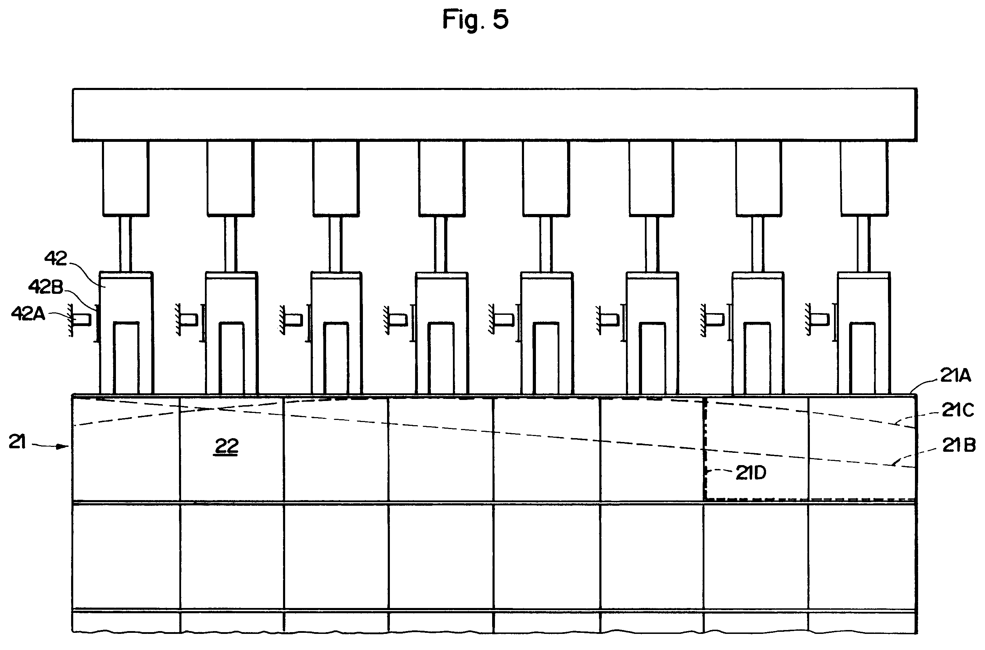

Cette possibilité supplémentaire d'utilisation des moyens de palpage est représentée à la figure 5 qui montre les huit racleurs 42 d'une rangée 21 en position de palpage, les autres éléments du dispositif de pinces n'étant pas représentés afin de ne pas surcharger la figure. En regard de chaque racleur 42 on a schématisé la cellule de détection 42A, par exemple une cellule optique, qui détecte la présence d'une zone 42B de chaque racleur. Lorsque la surface supérieure 21A de la rangée 21 est plane et horizontale, soit une situation parfaite comme représentée en trait continu, chaque zone 42B est présente en face de la cellule 42A correspondante, celle-ci détectant la présence de la pile ainsi que la hauteur correcte de la surface supérieure de ladite pile. Dans le cas où la surface 21A n'est pas horizontale mais est inclinée, comme représenté par le trait interrompu 21B ou est bombée, comme représenté en 21C ou même dans le cas où une ou plusieurs piles manquent, comme indiqué en 21D, certains des racleurs 42 ne seront plus correctement alignés, faisant que les cellules de détection 42A correspondant à ces racleurs ne seront plus en face des zones de détection 42B. Cet état est immédiatement signalé au programme qui peut commander alors un arrêt d'urgence de la machine. La longueur de la zone de détection 42B sur chaque racleur permet de s'accomoder de faibles variations d'inclinaison ou de planéité de la surface supérieure, par exemple 20 mm de différence de hauteur, les pinces étant capables de s'adapter à cette différence et de saisir correctement chaque pile. Dans le cas où cette différence de hauteur est dépassée, soit dans le cas où au-moins une zone de détection 42B vient en dehors du domaine de mesure d'une cellule 42A, les pinces ne peuvent s'adapter à cette différence de hauteur et il est nécessaire de stopper le processus afin de ne pas endommager soit les étiquettes, soit les pinces. Il est avantageux que cette détection de planéité et d'horizontalité soit faite par les racleurs 42, vu que ce sont les éléments disposés le plus près des pinces, mais il serait tout aussi possible d'effectuer les mêmes opérations avec soit les palpeurs 44, soit les palpeurs 45, si ceux-ci sont en nombre suffisant.

A côté de la forme d'exécution préférentielle décrite ci-dessus, comportant pour une rangée équipée d'un certain nombre de pinces, huit dans le cas présent, deux palpeurs 44 et deux palpeurs 45, disposés en avant et en arrière de chaque extrémité de la rangée de pinces 4, soit en regard de la première et de la dernière pince, tous les moyens de palpage étant supportés par le dispositif de pinces, on peut considérer différentes formes d'exécution. Selon une autre forme d'exécution du procédé, ce n'est pas la palette qui redescend et remonte pour chaque opération de palpage, mais le dispositif de palpage qui est capable de se déplacer selon l'axe vertical Z et qui, après que la palette ait été élevée à hauteur de palpage, effectue les mouvements nécessaires selon les axes Z et X afin d'effectuer les palpages nécessaires à la détection de la première rangée de piles ou d'objets à saisir. De même, et de préférence si cette dernière forme d'exécution du procédé est choisie, il n'est pas absolument nécessaire que les moyens de palpage soient supportés par le même support que le dispositif de pinces; on peut aussi avoir la forme d'exécution où les moyens de palpage sont supportés par un support indépendant de celui des pinces, le processus étant alors conduit de telle manière que, après que la détection de configuration de la couche ait été effectuée, les moyens de palpage sont éloignés et les pinces sont approchées de la première couche présente détectée afin de la saisir. De même, le dispositif a été décrit avec un palpage simultané de trois rangées successives, il est évidemment aussi possible d'équiper le dispositif afin que moins ou davantage que trois rangées soient palpées simultanément. D'autre part, il n'est pas absolument nécessaire que chaque rangée de palpeurs soit équipée de deux palpeurs comme dans l'exemple de forme d'exécution décrit, la rangée comprenant les palpeurs 44 et/ou celle comprenant les palpeurs 45 pourraient ne comprendre qu'un seul palpeur, disposé par exemple à une extrémité ou au centre de la rangée, ou alors huit palpeurs disposés en avant et en arrière de chaque pince 4, la rangée comportant les racleurs 42 restant de préférence complète afin de pouvoir détecter l'horizontalité et la planéité de la surface supérieure de la rangée comme décrit plus haut. De même les moyens de palpage ont été décrits comme étant des éléments mécaniques avec une exécution donnée, il est tout aussi possible de concevoir ces moyens différemment, soit fonctionnant aussi sous forme mécanique soit alors étant constitués par exemples de détecteurs de proximité ou alors constitués de moyens optiques, le choix entre ces différentes variantes étant fait selon le type d'objet à détecter.

Ainsi, un dépalettiseur fonctionnant selon les procédés et muni d'un dispositif selon l'invention peut accomplir automatiquement, sans intervention humaine, la détection de la première rangée d'objets, respectivement de piles d'étiquettes à saisir, puis la dépalettisation de l'empilement d'objets, ceci de manière fiable et en ne modifiant que très peu l'installation existante. Selon la forme d'exécution préférentielle décrite du dispositif, celui-ci peut en outre être utilisé pour détecter l'horizontalité et la planéité de la couche supérieure.

## Revendications

1. Procédé de détection du nombre de rangées (21) d'objets (22) présentes sur la couche (20) supérieure d'un empilement (2) d'objets disposés en une pluralité de rangées sur au-moins une couche, le procédé comportant les étapes suivantes:
un cycle de palpage est initialisé qui commande l'amenée selon un axe horizontal (X) de moyens de palpage (4) comportant au-moins un palpeur (42,44,45) apte à détecter la présence ou l'absence d'au-moins une rangée d'objets, au-dessus de ladite ou desdites premières rangées à palper,
puis élève selon l'axe vertical (Z) ledit empilement jusqu'en une position où au-moins un palpeur détecte la présence d'une rangée, l'élévation de l'empilement étant alors arrêté,
puis, au cas où le ou les palpeurs détectent la présence de la ou des rangées qu'ils surplombent, écarte selon un axe vertical (Z) lesdits moyens de palpage et la couche supérieure puis déplace lesdits moyens de palpage selon l'axe horizontal ((X) pour les amener au-dessus de la ou des rangées voisines de la ou des rangées dont la présence a déjà été détectée,
puis rapproche à nouveau selon l'axe vertical (Z) ledit ou lesdits palpeurs et la couche supérieure afin de détecter la présence ou l'absence de la ou des rangées qu'ils surplombent,
le cycle de palpage continuant jusqu'à ce que au maximum la pluralité de rangées présentes sur la couche supérieure ait été détectée et s'interrompant lorsque au-moins un palpeur détecte l'absence d'une rangée, respectivement détecte la première rangée présente sur la couche.

2. Procédé de détection selon la revendication 1, caractérisé en ce que les mouvements de rapprochement et d'éloignement selon l'axe vertical (Z) de l'empilement par rapport aux moyens de palpage sont effectués en élevant et abaissant l'empilement.

3. Procédé de détection selon la revendication 1, caractérisé en ce que les mouvements de rapprochement et d'éloignement selon l'axe vertical (Z) de l'empilement par rapport aux moyens de palpage sont effectués en abaissant et élevant les moyens de palpage.

4. Procédé de détection selon l'une des revendications 2 ou 3, caractérisé en ce que en début de cycle de palpage, au-moins un palpeur (42,44,45) est amené au-dessus de la position de la rangée correspondant à la rangée disposée le plus en arrière de la couche supérieure.

5. Procédé de détection selon l'une des revendications 2 ou 3, caractérisé en ce que en début de cycle de palpage, au-moins un palpeur (42,44,45) est amené au-dessus de la position de la rangée correspondant à la rangée disposée le plus en avant de la couche supérieure.

6. Procédé de détection selon l'une des revendications 2 à 5, caractérisé en ce que un arrêt de cycle est commandé lorsque l'erreur de planéité ou l'horizontalité de la première rangée détectée dépasse une valeur de consigne.

7. Procédé de dépalettisation caractérisé en ce qu'il comprend un cycle de palpage tel que mentionné dans les revendications 2 à 6, suivi d'un cycle de prise de ladite première rangée détectée.

8. Procédé de dépalettisation selon la revendication 7, caractérisé en ce que le cycle de palpage est activé uniquement après un chargement d'une nouvelle palettes (11) ou un arrêt de la machine de production (10), et que, dès qu'une rangée présente a été détectée, son numéro d'ordre sur la couche est enregistré dans le programme de commande, ladite rangée et les rangées suivantes étant prises séquentiellement.

9. Procédé de dépalettisation selon la revendication 8, caractérisé en ce que le cycle de palpage est activé pour la prise de chaque rangée.

10. Dispositif de détection du nombre de rangées (21) d'objets (22) de la couche (21) supérieure d'un empilement (2) d'objets disposés en une pluralité de rangées sur au-moins une couche, pour l'application du procédé de détection selon l'une des revendications 1 à 6 et du procédé de dépalettisation selon l'une des revendications 7 à 9,
caractérisé en ce qu'il comprend
des moyens de support (31,32) aptes à se déplacer au-moins selon un axe horizontal (X) perpendiculaire à l'axe (Y) de l'une desdites rangées,
des moyens de palpage (4) fixés audit support,
des moyens permettant de rapprocher et d'écarter selon l'axe vertical (Z) les moyens de palpage et ladite couche supérieure,
lesdits moyens de palpage étant constitués
d'au-moins un palpeur (42,44,45) disposé de manière à pouvoir détecter la présence ou l'absence d'au-moins une rangée d'objets,
et de moyens de commande (5) aptes à commander le cycle de palpage.

11. Dispositif selon la revendication 10, caractérisé en ce que les moyens de palpage sont constitués afin de pouvoir palper simultanément trois rangées d'objets, et comprennent au-moins un palpeur avant (44), un palpeur central (42) et un palpeur arrière (45) disposés de manière à surplomber trois rangées d'objets consécutives.

12. Dispositif selon la revendication 10, caractérisé en ce que le ou les palpeurs centraux (42) sont constitués par au-moins un racleur faisant partie des moyens de saisie (4) des objets, chacun desdits racleurs étant équipé de moyens de détection (42a,42b) de position selon l'axe vertical dudit racleur.

13. Dispositif selon l'une des revendications 11 ou 12, caractérisé en ce que les palpeurs avant (44) et arrière (45) sont constitués d'une tige (44A,45A) munie d'une pointe de contact (44D,45D), ladite tige pouvant être actionnée (44B,45B) selon un mouvement vertical, chacun desdits palpeurs étant équipé de moyens de détection (44C,45C) de position selon l'axe vertical de ladite tige.

14. Dispositif selon la revendication 11, caractérisé en ce que le nombre de palpeurs centraux (42) correspond au nombre d'objets d'une rangée, et en ce que les moyens de détection sont équipés de moyens (42A,42B) aptes à détecter une différence de hauteur entre au-moins deux points alignés selon l'axe de la rangée (Y) de la surface supérieure d'une rangée d'objets, les moyens de commande (5) étant aptes à commander un arrêt de la machine lorsque la différence de hauteur détectée est supérieure à une valeur limite.

15. Dispositif selon l'une des revendications 10 à 14, caractérisé en ce que les moyens de palpage (42,44,45) sont fixés aux moyens de saisie (3).

## Claims

1. Method of detecting the number of rows (21) of objects (22) present in a top layer (20) of a pile (2) of objects disposed in a plurality of rows in at least one layer, the method comprising the following steps:
a feeling cycle is initiated which actuates the displacement along a horizontal axis (X) of feeling means (4) comprising at least one feeler (42, 44, 45) able to detect the presence or the absence of at least one row of objects, above the said first row or rows to be sensed,
then raise the said pile along the vertical axis (Z) of the said pile to a position where at least one feeler detects the presence of a row, the raising of the pile being then stopped,
then, in the case where the feeler or feelers detect the presence of the row or rows which they overhang, move the said feeling means and the top layer away from each other along a vertical axis (Z), then displace the said feeling means along the horizontal axis (X) to convey them above the row or rows neighbouring the row or rows whose presence has already been detected,
then bring once again the said feeler or feelers and the upper layer closer together along the vertical axis (Z) in order to detect the presence or the absence of the row or rows which they overhang,
the feeling cycle being continued until at maximum the plurality of rows present in the upper layer has been detected and being discontinued when at least one feeler detects the absence of a row, or respectively detects the first row present in the layer.

2. Method of detection according to claim 1, characterized in that the movements of the pile closer to and further away from the feeling means along the vertical axis (Z) are effected by raising and lowering the pile.

3. Method of detection according to claim 1, characterized in that the movements of the pile closer to and further away from the feeling means along the vertical axis (Z) are effected by raising and lowering the feeling means.

4. Method of detection according to one of the claims 2 or 3, characterized in that at the start of the feeling cycle, at least one feeler (42, 44, 45) is brought above the position of the row corresponding to the row disposed hindmost in the top layer.

5. Method of detection according to one of the claims 2 or 3, characterized in that at the start of the feeling cycle, at least one feeler (42, 44, 45) is brought above the position of the row corresponding to the row disposed foremost with respect to the top layer.

6. Method of detection according to one of the claims 2 to 5, characterized in that a stopping of the cycle is commanded when an error of surface evenness or of horizontality of the first row detected exceeds a reference value.

7. Depalletizing method characterized in that it comprises a feeling cycle such as mentioned in the claims 2 to 6, followed by a cycle of grasping the said first row detected.

8. Depalletizing method according to claim 7, characterized in that the feeling cycle is initiated only after a loading of a new pallet (11) or a stopping of the production machine (10), and that, as soon as a final row has been detected, its ordinal number in the layer is recorded in a control program, said row and the rows following being grasped sequentially.

9. Depalletizing method according to claim 8, characterized in that the feeling cycle is initiated for the grasping of each row.

10. Apparatus for detecting the number of horizontal rows (21) of objects (22) in the top layer (21) 〈sic. 20〉 of a pile (2) of objects disposed in a plurality of rows on at least one layer for applying the method of detection according to one of the claims 1 to 6 and of the depalletizing method according to one of the claims 7 to 9,
characterized in that it comprises
means of support (31, 32) able to be displaced at least along a horizontal axis (X) perpendicular to the axis (Y) of the one of the said rows,
feeling means attached to said support,
means allowing the feeling means and the said top layer to be moved closer to each other or further away along the vertical axis (Z),
the said feeling means being made up of
at least one feeler (42, 44, 45) disposed so as to be able to detect the presence or the absence of at least one row of objects,
and control means (5) able to control the feeling cycle.

11. Apparatus according to claim 10, characterized in that the feeling means are designed in order to be able to probe for three rows of objects simultaneously, and comprise at least one front feeler (44), one middle feeler (42) and one rear feeler (45) disposed in such a way as to overhang three consecutive rows of objects.

12. Apparatus according to claim 10, characterized in that the middle feeler or feelers (42) comprise at least one sweeper forming part of the seizing means (4) of objects, each of the said sweepers being equipped with means of detection (42a, 42b) of the position according to the vertical axis of the said sweeper.

13. Apparatus according to one of the claims 11 or 12, characterized in that the front feeler (44) and rear feelers (45) are made up of a rod (44A, 45A) having a contact tip (44D, 45D), the said rod being able to be operated (44B, 45B) according to a vertical movement, each of the said feelers being equipped with means of detection (44C, 45C) of the position according to the vertical axis of the said rod.

14. Apparatus according to claim 11, characterized in that the number of middle feelers (42) corresponds to the number of objects of a row, and in that the means of detection are equipped with means (42A, 42B) able to detect a difference in height between at least two points aligned along the axis of the row (Y) of the top surface of a row of objects, the control means (5) being able to command a stop of the machine when the difference detected in height is greater than a limit value.

15. Apparatus according to one of the claims 10 to 14, characterized in that the feeling means (42, 44, 45) are fixed to the seizing means (3).

## Patentansprüche

1. Verfahren zum Feststellen der Zahl der Reihen (21) von Gegenständen (22) auf der oberen Schicht (20) eines Stapels (2) von Gegenständen, angeordnet in einer Mehrzahl von Reihen auf mindestens einer Schicht, wobei das Verfahren folgende Schritte umfasst:
ein Fühlzyklus wird initialisiert, welcher das Zuführen entlang einer horizontalen Achse (X) von Fühlmitteln (4) steuert, die mindestens einen Fühler (42, 44, 45) umfassen, die geeignet sind, das Vorhandensein oder das Nichtvorhandensein mindestens einer Reihe von Gegenständen festzustellen, oberhalb der zu fühlenden genannten ersten Reihe bzw. Reihen,
dann wird der genannte Stapels entlang der vertikalen Achse (Z) bis zu einer Position angehoben, wo mindestens ein Fühler das Vorhandensein einer Reihe feststellt, wonach das Anheben des Stapels gestoppt wird,
dann werden im Fall, wo der oder die Fühler das Vorhandensein der Reihe oder Reihen feststellt, die überragend sind, die genannten Fühlmittel und die obere Schicht entlang einer vertikalen Achse (Z) verfahren, wonach die genannten Fühlmittel entlang einer horizontalen Achse (X) verschoben werden, um sie über die benachbarte Reihe oder Reihen zu führen, dessen Vorhandensein bereits festgestellt wurde,
dann werden der genannte Fühler oder die genannten Fühler und die obere Schicht von neuem entlang der vertikalen Achse (Z) einander nähergebracht, um das Vorhandensein oder das Nichtvorhandensein der überragenden Reihe oder Reihen festzustellen,
der Fühlzyklus wird weitergeführt, bis maximal die Mehrheit der Reihen festgestellt worden ist, die auf der oberen Schicht vorhanden sind, und der unterbrochen wird, wenn mindestens einer der Fühler das Nichtvorhandensein einer Reihe feststellt, bzw. die erste Reihe auf einer Schicht feststellt.

2. Verfahren zum Feststellen nach Anspruch 1, dadurch gekennzeichnet, dass die Bewegungen des Annäherns und des Entfernens entlang der vertikalen Achse (Z) des Stapels bezüglich der Fühlmittel durch Anheben und Absenken des Stapels ausgeführt werden.

3. Verfahren zum Feststellen nach Anspruch 1, dadurch gekennzeichnet, dass die Bewegungen des Annäherns und des Entfernens entlang der vertikalen Achse (Z) des Stapels bezüglich der Fühlmittel durch Anheben und Absenken der Fühlmittel ausgeführt werden.

4. Verfahren zum Feststellen nach einem der Ansprüche 2 oder 3, dadurch gekennzeichnet, dass am Beginn des Fühlzyklus mindestens einer der Fühler (42, 44, 45) über die Position der Reihe geführt wird, die derjenigen entspricht, die am hintersten Ende der oberen Schicht angeordnet ist.

5. Verfahren zum Feststellen nach einem der Ansprüche 2 oder 3, dadurch gekennzeichnet, dass am Beginn des Fühlzyklus mindestens einer der Fühler (42, 44, 45) über die Position der Reihe geführt wird, die derjenigen entspricht, die am vordersten Ende der oberen Schicht angeordnet ist.

6. Verfahren zum Feststellen nach einem der Ansprüche 2 bis 5, dadurch gekennzeichnet, dass ein Stoppen des Zyklus veranlasst wird, wenn ein Fehler der Planheit oder der Horizontalität der ersten festgestellten Reihe einen Einstellwert überschreitet.

7. Verfahren zum Depalettieren, dadurch gekennzeichnet, dass es einen Fühlzyklus umfasst, wie er in den Ansprüchen 2 bis 6 erwähnt ist, gefolgt von einem Zyklus des Ergreifens der genannten ersten festgestellten Reihe.

8. Verfahren zum Depalettieren nach Anspruch 7, dadurch gekennzeichnet, dass der Fühlzyklus lediglich nach einem Laden einer neuen Palette (11) oder nach dem Anhalten der Produktionsmaschine (10) aktiviert wird, und dass, sobald eine vorhandene Reihe festgestellt worden ist, ihre Ordnungsnummer auf der Schicht im Steuerprogramm registriert ist, die genannte Reihe und die nachfolgenden Reihen sequentiell entnommen werden.

9. Verfahren zum Depalettieren nach Anspruch 8, dadurch gekennzeichnet, dass der Fühlzyklus für die Entnahme jeder Reihe aktiviert wird.

10. Vorrichtung zum Feststellen der Anzahl von Reihen (21) von Gegenständen (22) der oberen Schicht (21) eines Stapels (2) von Gegenständen, die in einer Mehrzahl von Reihen auf mindestens einer Schicht angeordnet sind, zur Durchführung des Verfahrens zum Feststellen nach einem der Ansprüche 1 bis 6 und des Verfahrens zum Depalettieren nach einem der Ansprüche 7 bis 9,
dadurch gekennzeichnet, dass sie umfasst
Tragmittel (31, 32), die mindestens entlang einer horizontalen Achse (X) verschiebbar sind, die rechtwinklig zu einer Achse (Y) von einer der genannten Reihe ausgerichtet ist,
Fühlmittel (4), die auf dem genannten Träger befestigt sind,
Mittel, welche ein Annähern und ein Entfernen entlang der vertikalen Achse (Z) zwischen den Fühlmitteln und der genannten oberen Schicht erlauben,
die genannten Fühlmittel umfassen
mindestens einen Fühler (42, 44, 45), der so angeordnet ist, dass er das Vorhandensein oder Nichtvorhandensein mindestens einer Reihe von Gegenständen feststellen kann,
und Steuermittel (5), die zum Steuern des Fühlzyklus geeignet sind.

11. Vorrichtung nach Anspruch 10, dadurch gekennzeichnet, dass die Fühlmittel so ausgebildet sind, dass sie gleichzeitig drei Reihen von Gegenständen fühlen können, und mindestens einen vorderen Fühler (44), einen zentralen Fühler (42) und einen hinteren Fühler aufweisen, die so angeordnet sind, dass sie drei aufeinanderfolgende Reihen von Gegenständen überragen können.

12. Vorrichtung nach Anspruch 10, dadurch gekennzeichnet, dass der oder die zentralen Fühler (42) mit mindestens einem Abstreifer ausgestattet ist, der Teil der Greifmittel (4) der Gegenstände ist, wobei jeder dieser Abstreifer mit Mitteln (42a, 42b) zum Feststellen der Position entlang der vertikalen Achse des genannten Abstreifers ausgestattet ist.

13. Vorrichtung nach einem der Ansprüche 11 oder 12, dadurch gekennzeichnet, dass die vorderen (44) und hinteren Fühler (45) mit einer Stange (44A, 45A) ausgestattet sind, versehen mit einer Kontaktspitze (44D, 45D), wobei die genannte Stange vertikal bewegbar (44B, 45B) ist, und jeder der genannten Fühler mit Mitteln (44C, 45C) zum Feststellen der Position entlang der vertikalen Achse der genannten Stange ausgestattet ist.

14. Vorrichtung nach Anspruch 11, dadurch gekennzeichnet, dass die Anzahl der zentralen Greifer (42) der Anzahl der Gegenstände einer Reihe entspricht, und dass die Mittel zum Feststellen mit Mitteln (42A, 42B) ausgestattet sind, die geeignet sind, einen Höhenunterschied zwischen mindestens zwei Punkten der Achse der Reihe (Y) der oberen Oberfläche einer Reihe von Gegenständen festzustellen, wobei die Steuermittel (5) geeignet sind, einen Halt der Maschine zu bewirken, wenn der festgestellte Höhenunterschied einen Grenzwert übersteigt.

15. Vorrichtung nach einem der Ansprüche 10 bis 14, dadurch gekennzeichnet, dass die Fühlmittel (42, 44, 45) an Greifmitteln (3) befestigt sind.
